Europäisches Patentamt

European Patent Office

Office européen des brevets

(19)

(11) Numéro de publication : **0 099 869**
**B1**

(12)                    FASCICULE DE BREVET EUROPÉEN

(45) Date de publication du fascicule du brevet :
09.09.87

(51) Int. Cl.⁴ : **E 02 B   3/02**, E 02 F   3/88

(21) Numéro de dépôt : **83870067.2**

(22) Date de dépôt : **27.06.83**

(54) Procédé et installation de pompage pour éliminer des sédiments marins ou fluviatiles.

(30) Priorité : **08.07.82 BE 208552**

(43) Date de publication de la demande :
**01.02.84 Bulletin 84/05**

(45) Mention de la délivrance du brevet :
**09.09.87 Bulletin 87/37**

(84) Etats contractants désignés :
**DE FR GB IT NL**

(56) Documents cités :
**FR-A- 2 042 050**
**FR-A- 2 304 391**
**US-A- 3 565 491**
**US-A- 4 147 450**

(73) Titulaire : **DE ONDERNEMINGEN S.B.B.M.**
**Louis Mettewiellaan 74/76**
**B-1080 Bruxelles (BE)**

**N.V. ATLAS COPCO AIRPOWER**
**Boomsesteenweg 957**
**B-2610 Wilrijk (BE)**

(72) Inventeur : **Van Bruwaene, Albert**
**Fr. de Voghellaan 56**
**B-1680 Lennik (BE)**
Inventeur : **Neyrinck, Luc**
**Archimedeslaan 38**
**B-2520 Edegem (BE)**
Inventeur : **Maertens, Luc**
**Molstraat 2**
**B-3000 Leuven (BE)**
Inventeur : **Verner, Bo**
**Belgielei 127**
**B-2000 Antwerpen (BE)**
Inventeur : **Fors, Staffan**
**Planetariumlaan 207**
**B-2610 Wilrijk (BE)**

(74) Mandataire : **De Brabanter, Maurice et al**
**Bureau VANDER HAEGHEN 63 Avenue de la Toison**
**d'Or**
**B-1060 Bruxelles (BE)**

EP 0 099 869 B1

Jouve, 18, rue St-Denis, 75001 Paris, France

## Description

La présente invention est relative à un procédé pour retirer à l'aide d'une installation fixe de dragage, des sédiments marins ou fluviatiles, déposés au fond d'une étendue d'eau, à une certaine distance d'une berge, par aspiration d'un mélange de ces sédiments et d'eau, au moyen d'une pompe, d'au moins une conduite d'aspiration comportant un tronçon de conduit sensiblement horizontal installé au fond de l'étendue d'eau susdite et un tuyau montant ainsi que d'une conduite de refoulement par lequel on chasse ledit mélange vers une berge ou vers des eaux profondes.

Elle concerne en particulier un procédé pour retirer des sédiments d'un bras de mer subissant les marées d'un chenal ou d'un bassin portuaire à l'aide d'une élinde munie de moyens d'aspiration pour remonter un mélange de sédiments et d'eau.

Elle concerne également l'installation nécessaire pour réaliser à bonne fin le procédé susdit.

Le procédé et le dispositif suivant l'invention trouvent leur principale application pour retirer une couche de vase présentant une densité relativement élevée, de manière permanente, afin de maintenir suffisant le tirant d'eau des navires.

C'est un fait connu, que la présence de bancs de vase dans les eaux navigables d'un port ou d'un estuaire entraîne la réduction du tirant d'eau admis des navires.

Principalement, les bancs de vase présentant une densité supérieure à 1,2 t/m³ rendent très difficile le pilotage des navires qui les traversent.

On sait que les travaux de dragage sont effectués soit à l'aide de dragues suceuses tractionnées, soit à l'aide d'installations de dragage stationnaires.

Selon une première méthode on élimine les sédiments à l'aide d'une élinde râclant le fond d'une étendue d'eau. En râclant le fond de l'étendue d'eau, l'élinde remue les couches denses compactées de sédiments aux endroits dans lesquels une couche de vase doit être enlevée.

La plupart du temps, la vase doit encore être rejetée à une certaine distance en mer ou être amenée par pompage vers le quai.

Cette méthode connue est coûteuse parce que le matériel de dragage est cher en premier investissement. En effet, il exige un équipage nombreux et consomme beaucoup d'énergie, principalement pour la propulsion.

La seconde méthode consiste à aspirer les sédiments dans une installation de dragage de manière continue ou intermittente.

Le document FR-A-2 304 391 décrit un procédé et un dispositif pour empêcher l'envasement.

Le dispositif comporte une pompe mammouth munie inférieurement de conduits d'aspiration.

Le procédé préconise d'aspirer les sédiments de manière continue, afin d'éviter les phénomènes de compactage de la vase et prévenir les obstructions des embouchures des conduites d'aspiration.

Ce dispositif présente l'inconvénient de ne pouvoir être utilisé qu'à proximité immédiate d'un embarcadère ou d'un mur de quai sur lequel est fixé le tuyau de remontée.

Ce système n'est pas approprié pour le retrait de sédiment des eaux navigables ou de chenaux se trouvant à une plus grande distance d'un mur de quai ou d'un autre point d'appui.

Une installation fixe et un procédé de dragage sont également décrits dans le brevet américain n° 4 147 450 qui préconise de retirer la vase de manière continue ou intermittente, simultanément par diverses embouchures réparties sur toute la longueur d'une conduite d'aspiration afin de mieux utiliser la puissance des pompes. (Ce document constituant l'état de la technique est présenté dans les préambules des revendications 1 et 5). Une obstruction des orifices latéraux du conduit d'aspiration est éliminée en mettant en œuvre des jets d'eau claire.

A cet effet, une série d'ajutages est répartie tout au long du conduit d'aspiration près des orifices de succion par lesquels sont aspirés les sédiments et ces ajutages sont mis en contact avec une source de liquide de rinçage sous pression commandée manuellement.

L'orientation et la puissance des jets de rinçage sont choisies en vue de disloquer et disperser toute accumulation de sédiments entraînée par la présence inopportune d'un objet encombrant au voisinage immédiat d'un orifice de succion. L'expérience montre cependant qu'une conduite d'aspiration munie de plusieurs orifices d'aspiration est sujette à des obstructions fréquentes des orifices disposés au voisinage de l'extrémité libre du tronçon de conduit horizontal.

Lorsqu'on refoule de l'eau claire dans le conduit d'aspiration au cours d'un rinçage ou lorsqu'on injecte de l'air comprimé après avoir obturé la conduite de refoulement, on ne libère dans l'appareil de dragage Schoonmaker, que le ou les premiers orifices du tronçon de conduit sensiblement horizontal, disposés au voisinage du tuyau montant, mais on ne parvient pas à éliminer les obstructions des derniers orifices ménagés au voisinage de l'extrémité du tronçon de conduit sensiblement horizontal. En effet, l'eau claire ou l'air comprimé injecté dans le tronçon de conduit sensiblement horizontal s'échappe par les orifices latéraux disposés au voisinage immédiat du tuyau montant.

On ne parvient donc jamais à libérer le tronçon de conduit sensiblement horizontal sur toute sa longueur.

La présente invention remédie à cet inconvénient ainsi qu'aux autres décrits précédemment.

Elle se distingue des procédés connus par le fait qu'elle propose d'éliminer les sédiments marins, à un endroit unique, pendant un intervalle de temps limité, en concentrant la puissance de la pompe sur un espace réduit, de manière à retirer la boue à une vitesse suffisante et sans présenter l'inconvénient de retirer des boues fortement diluées après une période de fonctionnement illimitée.

Elle concerne un procédé pour retirer à l'aide d'une élinde stationnaire, des sédiments marins ou fluviatiles déposés au fond d'une étendue d'eau, à une certaine distance d'une rive ou d'un mur de quai, par aspiration d'un mélange de ces sédiments et d'eau, au moyen d'une pompe, d'au moins une conduite d'aspiration comportant un tronçon de conduit sensiblement horizontal installé au fond de l'étendue d'eau susdite et un tuyau montant ainsi que d'une conduite de refoulement par lequel on chasse ledit mélange vers une berge ou vers des eaux profondes caractérisé en ce qu'on aspire les sédiments et l'eau de façon intermittente par une embouchure unique disposée à l'extrémité libre de la ou des conduites d'aspiration précitées en interrompant périodiquement l'aspiration de manière à obtenir une vitesse d'entraînement suffisante des sédiments sur toute la longueur de ladite conduite d'aspiration.

Les sédiments sont trop dilués pour la reprendre individuellement et à tour de rôle dans la ou les conduites d'aspiration lorsque le dépôt de nouveaux sédiments le permet.

Ce procédé permet d'éviter préventivement l'obstruction d'une portion quelconque du tronçon de conduit sensiblement horizontal, en concentrant la puissance d'aspiration en un point précis et en reprenant l'aspiration après une période d'interruption de l'ordre de quelques heures.

On choisit efficacement la distance entre les embouchures d'aspiration des diverses conduites d'aspiration, en fonction des propriétés d'écoulement de la vase maintenue en permanence en léger mouvement au fond du lit.

On crée périodiquement une dépression dans la conduite d'aspiration en injectant de l'air dans le tuyau montant susdit pendant un intervalle de temps que l'on détermine en fonction des apports de sédiments et de leurs propriétés physiques.

Lorsqu'on utilise une série d'élindes comprenant des conduites d'aspiration réparties sur le fond d'une étendue d'eau et des conduites de refoulement munies éventuellement de vannes, on injecte périodiquement de l'air comprimé produit par au moins un compresseur, tour à tour dans chaque tuyau montant ou groupe de tuyaux montants à l'aide de tuyaux, suivant un programme établi de manière à faire fonctionner à tour de rôle chaque embouchure d'aspiration ou groupe d'embouchures d'aspiration.

L'invention concerne également une installation fixe de dragage suivant le procédé susdit. Cette installation comprend une pompe, au moins une conduite d'aspiration stationnaire constituée d'un tronçon de conduit sensiblement horizontal et d'un tuyau montant et une conduite de refoulement servant à amener le mélange de sédiments et d'eau dans un réservoir, une zone de déversement ou des eaux vives.

Suivant une particularité de l'invention, le tronçon du conduit sensiblement horizontal de la conduite d'aspiration est muni d'une seule embouchure à son extrémité libre.

Dans une forme de réalisation particulière, l'installation comporte un faisceau de conduites d'aspiration de longueurs différentes disposées parallèlement l'une à l'autre et soumises tour à tour à l'action de la pompe.

Les conduites d'aspiration sont de préférence ancrées au fond du lit à l'aide de ballast.

D'autres caractéristiques et détails de l'invention apparaîtront au cours de la description suivante à l'aide des dessins ci-annexés, lesquels dessins illustrent, plutôt à titre d'exemple non limitatif, deux formes de réalisation choisies de l'invention.

Dans ces dessins :

La figure 1 est une vue en perspective d'un dispositif stationnaire suivant l'invention avec une pompe mécanique pour éliminer la vase, les tuyaux de remontée étant fixés au parement d'un mur de quai ;

La figure 2 est une section à une plus grande échelle d'un dispositif illustré à la figure 1, avec des pompes à air comprimé, dans lequel le refoulement est assuré par des pompes immergées dans un réservoir ;

La figure 3 est une coupe verticale d'un dispositif par lequel le transport de la vase à partir d'un grand réservoir est assuré à l'aide d'une pompe-booster et de conduites.

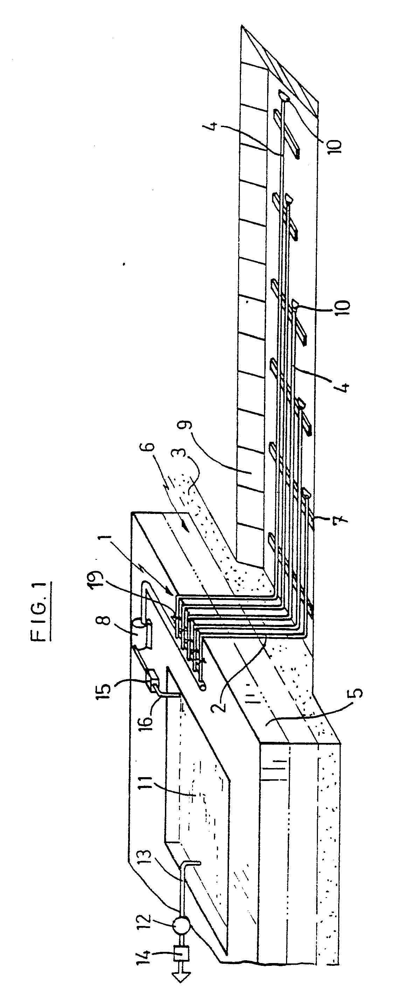

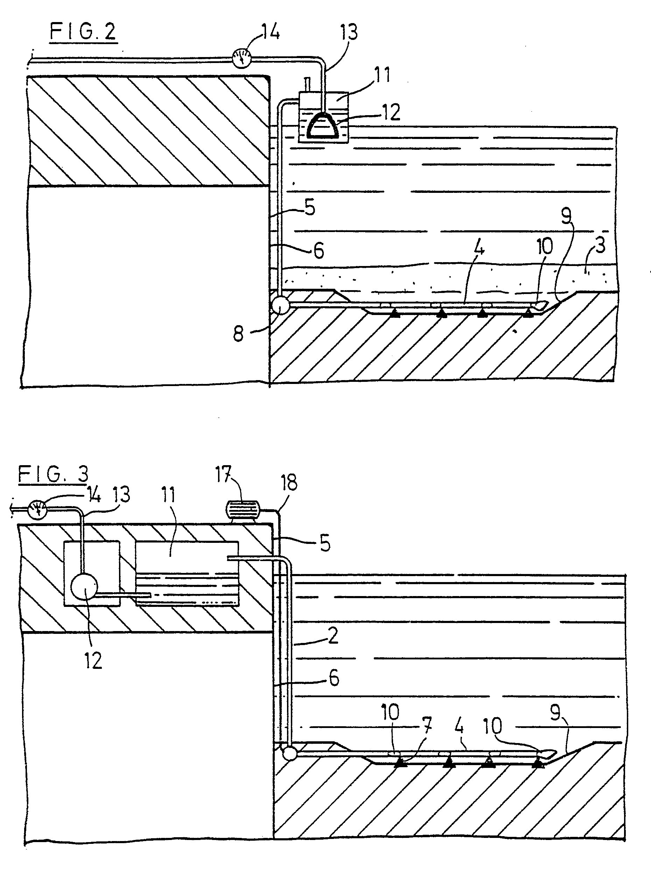

Une première forme de réalisation de l'installation fixe, désignée dans son ensemble par la notation de référence 1, en vue de l'élimination de vase suivant l'invention, est représentée aux figures 1 et 2.

Elle comporte au moins un tuyau de remontée 2, sensiblement vertical et une conduite d'aspiration 4, qui est disposée dans la couche 3 d'une zone d'estuaire et est fixé au parement 5 d'un mur de quai 6, embarcadère ou autre point fixe tels que pieu ou caisson 7.

La conduite d'aspiration 4 est déposée éventuellement au fond d'un piège à vase 9 sous la surface d'eau. La figure 1 illustre une forme de réalisation dans laquelle les diverses conduites d'aspiration sont disposées parallèlement les unes aux autres au fond du piège à vase 9.

Ces conduites d'aspiration 4 présentent diverses longueurs, de sorte que les extrémités de ces conduites 4 sont dispersées régulièrement dans la zone à draguer.

L'extrémité de chaque conduite 4 est avantageusement pourvue d'une embouchure d'aspiration 10.

La distance mutuelle entre deux embouchures successives 10 est judicieusement choisie, afin d'assurer un mouvement permanent de la vase par aspiration et gravité.

Par ce fait, on peut réaliser le retrait de la vase sous eau, sur une très grande surface.

Les dimensions et les inclinations du piège à vase 9 sont déterminées en fonction des propriétés de la boue et des quantités à éliminer. On a constaté en effet qu'un mouvement lent de la vase évite une consolidation de la vase. Ceci peut également être réalisé par agitation à l'aide de bras mécaniques ou de projection d'air et/ou d'eau. Selon les résultats de plusieurs recherches, la vase déposée au fond du lit se présente immédiatement après le dépôt, la plupart du temps dans un état de faible rigidité. Cela signifie que la vase présente une faible cohérence et s'écoule aisément dans l'embouchure de la conduite d'aspiration.

Cet état est favorisé par la force du courant et des vagues de l'eau qui la surmonte.

La rigidité de la vase dépend de la composition chimique et granulométrique de la vase.

Par un choix judicieux du diamètre des conduites d'aspiration 4 et de remontée 2, il est possible d'aspirer du sable et d'autres matières.

Dans la forme de réalisation de l'invention, illustrée à la figure 2, la vase est chassée par le principe de la pompe mammouth dans les tuyaux de remontée 2 vers un réservoir 11, duquel elle est refoulée par une pompe mécanique fixe booster 12 au travers de conduites 13 munies d'un compteur 14.

Le dispositif suivant l'invention permet de réaliser une sensible économie pour maintenir suffisante la profondeur d'un cours d'eau. Elle n'exige aucun matériel flottant. L'installation fixe peut être construite simplement et exploitée automatiquement. L'exploitation peut se faire en continu pendant la journée ou exclusivement par intermittence à des moments choisis.

La quantité de vase retirée est mesurée à l'aide d'un appareil de mesure de la concentration 15 et de débit sur la conduite de rejet 16.

Si on utilise le principe connu de la pompe mammouth l'air comprimé d'un compresseur 17 est mis en contact successivement de manière programmée, avec divers tuyaux de remontée par la conduite sous pression 18 (voir figure 3).

Le cycle de travail et le débit des conduites d'aspiration sont déterminés en fonction des apports et des caractéristiques de la vase en vue de maintenir un mouvement constant vers le piège à vase et éviter une consolidation ou une dilution exagérée.

Une pompe est stoppée lorsque la teneur en eau de la vase dépasse une certaine limite. Ensuite, on peut mettre en œuvre d'autres embouchures d'aspiration par l'ouverture programmée des vannes 19.

L'invention peut être mise en œuvre pour l'élimination de vase des chenaux aboutissant vers des ports, devant des ouvrages d'art tels que des écluses et des cales sèches, ainsi que dans des bassins portuaires.

**Revendications**

1. Procédé pour retirer à l'aide d'une installation fixe de dragage, des sédiments marins ou fluviatiles, déposés au fond d'une étendue d'eau, à une certaine distance d'une berge, par aspiration d'un mélange de ces sédiments et d'eau, au moyen d'une pompe (8), d'au moins une conduite d'aspiration (4) comportant un tronçon de conduit sensiblement horizontal installé au fond de l'étendue d'eau susdite ainsi qu'un tuyau montant (2) et d'une conduite de refoulement (16) par lequel on chasse ledit mélange vers une berge ou vers des eaux profondes, caractérisé en ce qu'on aspire les sédiments et l'eau de façon intermittente par une embouchure unique (10) disposée à l'extrémité libre de la ou des conduites d'aspiration (4) précitées de manière à obtenir une vitesse d'entraînement suffisante des sédiments sur toute la longueur de la ou les conduites d'aspiration (4) en interrompant périodiquement l'aspiration, lorsque les sédiments aspirés sont trop dilués, pour la reprendre après un certain temps lorsque le dépôt de nouveaux sédiments le justifie.

2. Procédé suivant la revendication 1, dans lequel on met en œuvre une série de conduites d'aspiration (4) réparties sur le fond d'une étendue d'eau et une conduite de refoulement (16), caractérisé en ce qu'on injecte périodiquement de l'eau ou de l'air comprimé produit par au moins un compresseur (17), tour à tour dans chaque tuyau montant (2) ou groupe de tuyaux montants, à l'aide de tuyaux (18), suivant un programme établi de manière à faire fonctionner à tour de rôle chaque embouchure d'aspiration (10) ou groupe d'embouchures d'aspiration.

3. Procédé suivant l'une quelconque des revendications 1 et 2, en ce qu'on réalise l'aspiration par une pompe mécanique (8), cette aspiration étant réglée suivant un programme établi par la fermeture successive de vannes (19).

4. Procédé suivant l'une quelconque des revendications précédentes, caractérisé en ce que, après une interruption plus ou moins prolongée de l'aspiration, on élimine une obstruction de l'embouchure d'aspiration d'une conduite d'aspiration (4) en injectant de l'air comprimé dans le tuyau montant (2), tandis que l'on obture la conduite de refoulement (16), afin de repousser et de disperser au moyen d'air comprimé l'accumulation de sédiments dans la conduite d'aspiration (4) ou au voisinage de l'embouchure d'aspiration (10) de cette conduite d'aspiration (4).

5. Installation fixe de dragage mettant en œuvre le procédé suivant l'une ou l'autre des revendications précédentes, comprenant une pompe (8), au moins une conduite d'aspiration stationnaire (4) constitué d'un tronçon de conduit sensiblement horizontal et d'un tuyau montant (2) et une conduite de refoulement (16) servant à amener un mélange de sédiments et d'eau dans un réservoir (11), une zone de déversement ou des eaux vives, caractérisé en ce que le tronçon de conduit sensiblement horizontal de la ou des conduites d'aspiration est muni d'une seule embouchure (10) à son extrémité libre.

6. Installation suivant la revendication 5, caractérisée en ce qu'elle comporte un piège (9) à vase ou à sédiments, sur le fond duquel est déposé le tronçon de conduit sensiblement horizontal d'au moins une conduite d'aspiration (4).

7. Installation suivant la revendication 6, caractérisée en ce que les tronçons de conduits sensiblement horizontaux des conduites d'aspiration (4) sont déposés sur le fond du piège précité (9), les embouchures (10) desdits tronçons de conduits sensiblement horizontaux étant réparties sur le fond du piège susdit (9).

8. Installation suivant l'une quelconque des revendications 5 à 7, caractérisée en ce qu'elle comporte un faisceau de conduites d'aspiration (4) de longueurs différentes, disposées parallèlement l'une à l'autre et soumises tour à tour à l'action de la pompe (8).

**Claims**

1. A method for extracting, with the aid of a fixed dredging installation, marine or river sediment deposited at the bottom of an expanse of water at a certain distance from a bank, by suction of a mixture of these sediments and water, by means of a pump (8), of at least one suction pipe (4) comprising a substantially horizontal section of pipe installed at the bottom of the above-mentioned expanse of water as well as a rising pipe (2) and a delivery pipe (16) through which said mixture is sent towards a bank or towards deep water, characterized in that the sediments and water are sucked intermittently through a single mouthpiece (1) arranged at the free end of the above-mentioned suction pipe or pipes (4) in such a way as to obtain a sufficient sediment entrainment speed along the whole length of the suction pipe or pipes (4), periodically interrupting the suction when the sucked sediments are too diluted, and resuming it after a time when the deposit of new sediment justifies it.

2. A method according to claim 1, in which a set of suction pipes (4), spread over the bottom of an expanse of water, and a delivery pipe (16) are put into operation, characterized in that water or compressed air produced by at least one compressor (17) is periodically injected into each rising pipe (2) or group of rising pipes in turn, by means of pipes (18), according to an established programme so as to make each suction mouthpiece (10) or group of suction mouthpieces function in turn.

3. A method according to claim 1 or claim 2, characterized in that the suction is effected by a mechanical pump (8), this suction being regulated according to an established programme by the successive closure of valves (19).

4. A method according to any one of the preceding claims, characterized in that, after a more or less prolonged interruption in suction, an obstruction in the suction mouthpiece of a suction pipe (4) is eliminated by injecting compressed air into the rising pipe (2), while the delivery pipe (16) is closed, so as to repel and disperse by means of compressed air the accumulation of sediment in the suction pipe (4) or in the vicinity of the suction mouthpiece (10) of this suction pipe (4).

5. A fixed dredging installation implementing the method according to any one of the preceding claims, comprising a pump (8), at least one stationary suction pipe (4) consisting of a substantially horizontal section of pipe and a rising pipe (2) and a delivery pipe (16) serving to carry a mixture of sediment and water into a tank (11), a discharge zone or running water, characterized in that the substantially horizontal section of the suction pipe or pipes is provided with a single mouthpiece (10) at its free end.

6. An installation according to claim 5, characterized in that it comprises a silt or sediment trap, on the bottom of which is arranged the substantially horizontal section of at least one suction pipe (4).

7. An installation according to claim 6, characterized in that the substantially horizontal sections of the suction pipes (4) are arranged on the bottom of the above-mentioned trap (9), the mouthpieces (10) of said substantially horizontal pipe sections being spread over the bottom of the above-mentioned trap (9).

8. An installation according to any one of claims 5 to 7, characterized in that it comprises a set of suction pipes (4) of different lengths, arranged parallel to each other and subjected in turn to the action of the pump (8).

**Patentansprüche**

1. Verfahren zum Entfernen von Meeres- oder Flußsedimenten, die sich in einer gewissen Entfernung von einem Ufer am Grund einer Wasserfläche abgelagert haben, mit Hilfe einer ortsfesten Naßbaggereinrichtung durch Ansaugen einer Mischung aus diesen Sedimenten und Wasser mittels einer Pumpe (8), mindestens einer Ansaugleitung (4), umfassend einen im wesentlichen horizontalen am Grund der Wasserfläche installierten Leitungsabschnitt sowie ein Steigrohr (2), und mittels einer Rückflußleitung (16), mit welcher die Mischung zu einem Ufer oder ins tiefe Wasser getrieben wird, dadurch gekennzeichnet, daß man die Sedimente und das Wasser mit einem einzigen, am freien Ende der Ansaugleitung(en) (4) angeordneten Mundstück intermittierend ansaugt, sodaß man eine zum Mitführen der Sedimente ausreichende Geschwindigkeit über die gesamte Länge der Ansaugleitung(en) (4) erzielt, wobei die Ansaugung periodisch unterbrochen wird, wenn die angesaugten Sedimente zu verdünnt sind, und nach einer gewissen Zeit wieder aufgenommen wird, wenn es die Ablagerung neuer Sedimente rechtfertigt.

2. Verfahren nach Anspruch 1, bei welchem man eine Reihe von Ansaugleitungen (4), über den Grund einer Wasserfläche verteilt, und eine Rückflußleitung (16) zum Einsatz bringt, dadurch gekennzeichnet, daß man periodisch Wasser oder Druckluft aus mindestens einem Kompressor (17) wechselweise in jedes Steigrohr (2) oder jede Gruppe von Steigrohren mit Hilfe von Rohren (18) gemäß einem Programm einleitet, das so erstellt wird, daß jedes Ansaugmundstück (10) oder jede Gruppe von Ansaugmundstücken der Reihe nach in Funktion gesetzt wird.

3. Verfahren nach einem der Ansprüche 1 und 2, daß die Ansaugung mittels einer mechanischen Pumpe (8) erfolgt, wobei diese Ansaugung gemäß einem durch das aufeinanderfolgende Schließen von Ventilen (19) erstellten Programm geregelt wird.

4. Verfahren nach einem der vorhergehenden Ansprüche, dadurch gekennzeichnet, daß nach einer mehr oder weniger langen Unterbrechung der Ansaugung ein Verschluß des Ansaugmundstücks einer Ansaugleitung (4) durch Einleiten von Druckluft in das Steigrohr (2) entfernt wird, während man die Rückflußleitung (16) versperrt, damit die Ansammlung von Sedimenten in der Ansaugleitung (4) oder nahe dem Ansaugmundstück (10) dieser Ansaugleitung (4) mittels Druckluft zurückgestoßen und verteilt wird.

5. Ortsfeste Naßbaggereinrichtung zur Durchführung des Verfahrens nach dem einen oder anderen der vorhergehenden Ansprüche, umfassend eine Pumpe (8), mindestens eine ortsfeste Ansaugleitung (4), bestehend aus einem im wesentlichen horizontalen Leitungsabschnitt und einem Steigrohr (2), und eine Rückflußleitung (16) zum Leiten einer Mischung aus Sedimenten und Wasser in ein Reservoir (11), eine Austragszone oder in fließendes Gewässer, dadurch gekennzeichnet, daß der im wesentlichen horizontale Leitungsabschnitt der Ansaugleitung(en) mit einem einzigen Mundstück (10) an seinem freien Ende versehen ist.

6. Einrichtung nach Anspruch 5, dadurch gekennzeichnet, daß sie eine Schlamm- oder Sedimentfalle (9) umfaßt, auf deren Boden der im wesentlichen horizontale Leitungsabschnitt von zumindest einer Ansaugleitung (4) liegt.

7. Einrichtung nach Anspruch 6, dadurch gekennzeichnet, daß die im wesentlichen horizontalen Leitungsabschnitte der Ansaugleitungen (4) auf dem Boden der genannten Falle (9) liegen, wobei die Mundstücke (10) der im wesentlichen horizontalen Leitungsabschnitte über den Boden der genannten Falle (9) verteilt sind.

8. Einrichtung nach einem der Ansprüche 5 bis 7, dadurch gekennzeichnet, daß sie ein Bündel von Ansaugleitungen (4) unterschiedlicher Länge umfaßt, welche parallel zueinander verlegt sind und nacheinander der Wirkung der Pumpe (8) unterworfen werden.

FIG.1

FIG.2

FIG.3